# EUROPÄISCHE PATENTSCHRIFT

(11) **EP 0 728 978 B1**
(45) Veröffentlichungstag und Bekanntmachung des Hinweises auf die Patenterteilung: **26.05.1999**
(21) Anmeldenummer: 95103830.6
(22) Anmeldetag: 16.03.1995
(51) Int. Cl.: F16L 27/08, F16L 33/24

(54) **Sanitärschlauch mit drehbarer Kupplung eines Anschlussstückes**
Sanitary hose with rotatable coupling of a fitting
Tuyau souple sanitaire avec accouplement tournant d'un raccord

(30) Priorität: 21.02.1995 DE 19505911
(43) Veröffentlichungstag der Anmeldung: 28.08.1996
(73) Patentinhaber: OLDOPLAST KUNSTSTOFFPROFILE GMBH & CO. KG, 45772 Marl (DE)
(72) Erfinder: Börgel, Helmut, D-45772 Marl (DE)
(74) Vertreter: Herrmann-Trentepohl, Werner, Dipl.-Ing.

(56) Entgegenhaltungen:
- EP-A- 0 423 644
- CH-A- 564 720
- DE-A- 2 711 584
- DE-A- 3 509 231
- DE-U- 9 311 787

## Beschreibung

Die Erfindung betrifft einen Sanitärschlauch mit drehbarer Kupplung eines Anschlußstückes gemäß dem Oberbegriff des Anspruches 1.

Sanitärschläuche mit drehbarer Kupplung werden vor allem in Bädern verwendet, wobei die Kupplung vorzugsweise zum drehbaren Anschluß einer Handbrause dient. Die drehbare Befestigung der Handbrause am Sanitärschlauch erleichtert die Handhabung wesentlich, weil die dafür in Frage kommenden Sanitärschläuche im wesentlichen torsionsfest sind und die Handbrause bei fester Verschraubung mit dem Sanitärschlauch sich bei ihrer Anwendung kaum radial drehen läßt. Ist dagegen erfindungsgemäß der Sanitärschlauch mit einer drehbaren Kupplung der Handbrause versehen, läßt sich die Handbrause um das Ende des Sanitärschlauches drehen und dadurch besser handhaben.

Die Erfindung betrifft insbesondere Sanitärschläuche aus Kunststoff, darunter vorzugsweise fortgeschrittene Ausführungsformen solcher Schläuche, bei denen der Sanitärschlauch aus einem Innenschlauch und einem Außenschlauch aufgebaut ist, wobei zwischen den beiden Schläuchen eine spiralförmig gewickelte Einlage angeordnet ist. Diese Einlage besteht im wesentlichen aus einer metallisierten Polyesterfolie, die mit Hart-PVC vollständig umspritzt ist. Durch den transparenten Außenschlauch bekommt der erfindungsgemäße Kunststoffschlauch das Aussehen eines Metallschlauches.

Es ist bekannt, eine Überwurfmutter, die auf einem Außengewinde des Anschlußstückes bzw. des Handbrausenschlauchendes reitet, mit einem Innenrohr zu verspannen, wobei die Überwurfmutter sich auf einem Außenringflansch des Innenrohres abstützt. Das Innenrohr ist dabei in den Innenzylinder einer Muffe eingeführt, deren Außenzylinder mit einer weiteren Überwurfmutter verschraubt ist, welche sich auf einer Hülse des Sanitärschlauches abstützt. Da die Stirnseite des inneren Endes des Innenrohres mit einem Flansch des Schlauches bei Betätigung der Verschraubung verspannt wird, läßt sich die Überwurfmutter der Handbrause auf der Unterseite des Innenrohraußenflansches drehen.

Nachteilig ist der beträchtliche Aufwand bei dieser Art von drehbaren Kupplungen an Sanitärschläuchen. Das ergibt sich aus der Kombination zweier Überwurfmuttern mit einer Muffe, wobei diese Teile aus einem korrosionsbeständigen Metall bestehen oder verchromt sein müssen. Diese Teile fallen auch verhältnismäßig groß und schwer aus, wenn man den lichten Durchmesser des Innenrohres im Interesse uneingeschränkter Strömungsquerschnitte für das Heiß- und Warmwasser mit einer Öffnung versieht, die dem lichten Innendurchmesser des Schlauches entspricht.

Es ist auch bekannt, als Teil der Schlauchkupplung das Schlauchende und den Außenmantel des wie beschrieben aus Kunststoff bestehenden Sanitärschlauches im Spritzguß eine Hülse aus Kunststoff aufzubringen, die einen Außenringflansch aufweist und mit ihrem rohrförmigen Teil das Schlauchende formschlüssig umgreift. Dabei wird bei bekannten Sanitärschläuchen als drehbare Kupplung das außen geflanschte Innenrohr in den Schlauch eingeführt, um auf diese Weise eine Drehbarkeit der Handbrause gegenüber dem Anschlußteil des Schlauches zu gewährleisten. Solche Sanitärschläuche sind zwar einfacher und leichter aufgebaut, der lichte Durchmesser des Innenrohres ist jedoch wesentlich geringer als die Schlauchöffnung. Das bedeutet einen eingeschränkten Wasserfluß, der unerwünscht ist, weil darunter die Leistungsfähigkeit der Handbrause leidet.

Die Erfindung geht demgegenüber einen anderen Weg, dessen Grundgedanke im Anspruch 1 wiedergegeben ist. Weitere Merkmale der Erfindung sind Gegenstand der Unteransprüche.

Dadurch, daß die Überwurfmutter axial auf einer an das Sanitärschlauchende angespritzten Hülse abgestützt ist, vereinfacht sich die drehbare Kupplung, da die sonst als Zwischenstück vorgesehene Muffe und die mit ihr zusammenwirkende Überwurfmutter entfallen. Dadurch, daß erfindungsgemäß ferner die Überwurfmutter dadurch geändert ist, daß sie einen Innenzylinder aufweist, gegen den das Innenrohr abgedichtet ist, das vor dem Außenringflansch der Hülse endet, kann unter entsprechender Verkürzung des Innenrohres dessen lichter Durchmesser groß gewählt werden, so daß eine Einschränkung des Wasserflusses aus dem Schlauch in das Anschlußstück bzw. die Handbrause vermieden wird.

Die Erfindung hat den Vorteil, daß sie auf einfache Weise einerseits eine Einschränkung des Wasserflusses vermeidet, andererseits aber unter Vereinfachung der Kupplung mit den bewährten, vorzugsweise angespritzten Kupplungshülsen verwendet werden kann.

Vorzugsweise vereinfacht man die drehbare Kupplung an dem erfindungsgemäßen Sanitärschlauch durch Verwirklichung der Merkmale des Anspruches 2 weiter. Dadurch, daß hierbei das innere Ende des Innengewindes nicht nur zur axialen Begrenzung der Einschraubtiefe des Innenrohres, sondern darüber hinaus zu dessen Abstützung dient, kann man den Außenflansch des Innenrohres problemlos mit der Stirnseite des Anschlußstückes beim Aufschrauben der Überwurfmutter verspannen, wobei sich dann die Handbrause zusammen mit der Überwurfmutter auf dem Schlauchende drehen läßt.

Im allgemeinen wird man zur Vereinfachung der Abdichtung von den Merkmalen des Anspruches 3 Gebrauch machen, da die vorgesehene glattzylindrische Ausbildung der Überwurfmutter zwischen ihrem Überwurfinnenflansch und dem Überwurfmuttergewinde für Dichtungen geeignet ist, die grundsätzlich als Rundschnurdichtungen einfach ausgebildet werden können.

Deshalb ist gemäß Anspruch 4 erfindungsgemäß vorgesehen, daß der Außenringflansch der am Schlauchende angebrachten Hülse mit einer Nut als Sitz eines O-Ringes ausgebildet ist. Ein solcher O-Ring kann ferner nach den Merkmalen des Anspruches 5 auch für die Abdichtung des Innenrohres vorgesehen werden. Hierbei wird das Innenrohr axial so weit verkürzt, daß praktisch nur noch der Sitz für den O-Ring übrig bleibt, wodurch eine leichte und einfache Anordnung der Kupplung gewährleistet ist.

Es ist natürlich zweckmäßig, an Sanitärschläuchen, insbesondere an Brauseschläuchen, kantige Übergänge nicht zuletzt zum Ausschluß der Verletzungsgefahren zu vermeiden. Dem trägt der Anspruch 6 Rechnung, da hiernach der axiale Außenmantel der Überwurfmutter konisch erweiternd in Richtung des Anschlußstückes bzw. der Handbrause ausgebildet ist. Das Muttergewinde hat dann einen größeren Durchmesser als der glatte Innenzylinder in der Überwurfmutter, welcher das Innenrohr aufnimmt.

Im Hinblick auf die weite Verbreitung und die Zweckmäßigkeit des bekannten Sanitärschlauches, der auf seinem Ende die angespritzte Kunststoffhülse aufweist, ist es zweckmäßig, diese Ausbildung eines Sanitärschlauches auch für die Erfindung zu verwenden. Dies geschieht zweckmäßig mit den Merkmalen des Anspruches 7. Dabei sorgt das aufgebrachte Metallrohr für eine gute Drehbarkeit der Überwurfmutter, da sich dessen Außenflansch zwischen die Unterseite des Hülsenflansches und den Innenringflansch der Überwurfmutter legt.

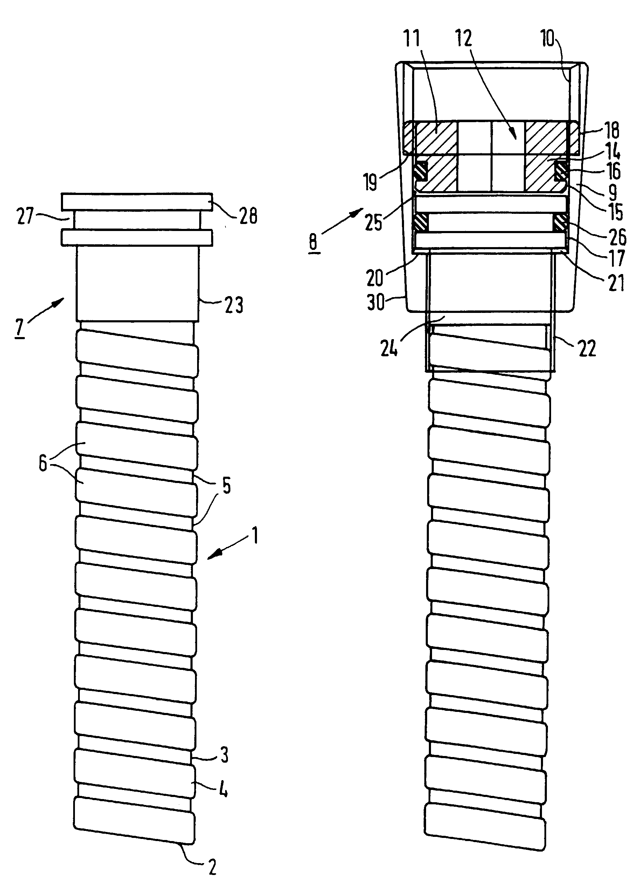

Die Einzelheiten, Merkmale und andere Vorteile der Erfindung ergeben sich aus der nachfolgenden Beschreibung einer Ausführungsform anhand der Figuren in der Zeichnung. Die Zeichnung zeigt im linken Teil der Darstellung das anschlußstückseitige Ende eines Sanitärschlauches 1 und rechts den mit einer drehbaren Kupplung für eine nicht dargestellte Handbrause versehenen Sanitärschlauch in der linken Darstellung entsprechender Wiedergabe.

Der Sanitärschlauch 1 hat einen in der Zeichnung nicht sichtbaren Innenschlauch 2 aus Kunststoff und einen koaxialen, transparenten Außenschlauch 3. Zwischen den beiden Schläuchen 2, 3 ist eine spiralförmig gewickelte Einlage 4 angeordnet. Sie besteht im wesentlichen aus einer metallisierten Polyesterfolie, die mit Hart-PVC vollständig umspritzt ist. Da das Hart-PVC durchsichtig ist, hat der Sanitärschlauch 1 das Aussehen eines Metallschlauches. Aufgrund der Einlage 4 bilden sich zwischen den Windungen der Spirale Vertiefungen, von denen einige bei 5 links in der Zeichnung dargestellt sind, und Erhöhungen von denen einige mit 6 bezeichnet sind. Als Anschluß wird eine Hülse 7 auf das Schlauchende im Spritzgußverfahren angespritzt. Dabei füllt das Kunststoffmaterial der Hülse 7 beim Spritzgießen die Vertiefungen 5 des Schlauchendes aus, wodurch nach Art einer Verzahnung zwischen der Hülse 7 und dem Schlauch 1 ein Formschluß eintritt, der die Hülse axial auf dem Schlauchende festlegt. Dabei wählt man als Werkstoff für das spritzgegossene Anschlußteil 7 Hart-PVC. Denn die Hülse soll steif sein, wobei man im Interesse einer gewissen Flexibilität die Shorehärte etwa bei 95 wählt.

Die allgemein mit 8 bezeichnete und im rechten Teil der Zeichnung wiedergegebene Kupplung des Anschlußstückes bedient sich einer Überwurfmutter 9, die mit einem Innengewinde 10 auf dem Außengewinde des Anschlußstückes bzw. der Handbrause reitet und dabei den Außenringflansch 11 eines Innenrohres 12 mit der Stirnseite der Handbrause verspannt. Das Innenrohr 12 hat auf seinem glattzylindrischen Teil 14 eine Ringnut 15, welche einen O-Ring 16 aufnimmt, mit dem das Innenrohr 12 gegen den glattzylindrischen Innenteil 17 der Überwurfmutter abgedichtet ist. Das Innenrohr 12 läßt sich mit dem Außengewinde 18 seines Ringflansches 11 mit dem inneren Ende 19 des Innengewindes 10 der Überwurfmutter verspannen. Die Überwurfmutter selbst hat einen Innenflansch 20, der sich mit seiner Ringfläche auf der Unterseite eines Flansches 21 einer Metallhülse 22 abstützt, welche auf den Außenzylinder 23 der angespritzten Hülse 7 aufgezogen und drehfest ist und mit seinem inneren Ende über den Zylinder 24 der Hülse 7 hinaus das anschließende Schlauchende überdeckt. Dadurch ist eine hinreichend steife Anordnung gewonnen.

Die Überwurfmutter hat zwischen ihrem anschlußseitigen Innengewinde 10 und ihrem Überwurfinnenflansch 20 einen glattzylindrischen Abschnitt 25, der als Dichtfläche für die O-Ringdichtung 16 des Innenrohres 12 und einen O-Ring 26 dient, welcher in einer Nut 27 im Außenringflansch 28 der angespritzten Hülse 7 seinen Dichtsitz hat. Das Innenrohr 14 ist dabei auf einen Ring verkürzt, dessen Außenzylinder lediglich eine Länge aufweist, die zur Ausbildung der Nut 27 ausreicht.

Der axiale Außenmantel 30 der Überwurfmutter 9 ist konisch ausgebildet. Das Muttergewinde 10 ist in einem gegenüber dem glatten Innenzylinder 25 vergrößerten Innenzylinder angeordnet.

Der Innenzylinder 25 und der Innenflansch 20 der Überwurfmutter 9 lassen sich leicht auf der Unterseite des Hülsenflansches 21 drehen.

Wie ersichtlich, ist das gegen den Innenzylinder 25 abgedichtete Innenrohr 12 so kurz ausgebildet, daß es vor dem Außenringflansch 28 der Hülse 7 endet. Dadurch ist es möglich, den lichten Durchmesser des Innenrohres 14 und seines Flansches 19 gleich oder noch größer als den lichten Innendurchmesser des Schlauches zu machen und dadurch Einschränkungen des Strömungsquerschnittes zu vermeiden.

Bei der Anbringung wird die Überwurfmutter 9 mit dem Außengewinde des Handbrausenstückes verschraubt, bis sich dessen Stirnseite auf der Stirnseite des Innenrohrflansches abstützt. Das Innenrohr 12 und die Überwurfmutter 9 sind dann mit der Handbrause fest verschraubt. Die Teile lassen sich jedoch gegenüber dem Hülsenflansch 28 drehen, wobei sich der Innenflansch 20 auf der Unterseite des Metall flansches 21 dreht. Die Verbindung ist gleichwohl dicht, da infolge der Ringdichtung 16 Wasser nicht durch das Überwurfgewinde nach außen dringen kann und auch der Innenzylinder der Überwurfmutter gegen den Hülsenflansch 28 mit der O-Ringdichtung 26 abgedichtet ist.

## Patentansprüche

1. Sanitärschlauch (1) mit drehbarer Kupplung (8) eines Anschlußstückes, bei der eine auf einem Außengewinde des Anschlußstückes reitende Überwurfmutter (9) einen Außenringflansch (11) eines Innenrohres (12) mit der Stirnseite des Anschlußstückes verspannt, wobei das Innenrohr gegen einen Innenzylinder abgedichtet ist, dadurch gekennzeichnet, daß sich die Überwurfmutter (9) axial auf einer an das Sanitärschlauchende angespritzten Hülse (7) abstützt und das gegen einen Innenzylinder (25) der Überwurfmutter (9) abgedichtete Innenrohr (12) mit axialem Abstand vor einem Außenringflansch (28) der Hülse (7) endet.

2. Sanitärschlauch nach Anspruch 1, dadurch gekennzeichnet, daß das innere Ende (19) des Innengewindes (10) der Überwurfmutter (9) zur axialen Abstützung des eingeschraubten Innenrohrflansches (11) dient.

3. Sanitärschlauch nach einem der Ansprüche 1 oder 2, dadurch gekennzeichnet, daß die Überwurfmutter (9) zwischen ihrem anschlußstückseitigen Innengewinde (10) und ihrem Überwurfinnenflansch (20) glattzylindrisch als Dichtfläche für Ringdichtungen (16, 26) der angespritzten Hülse (7) und des Innenrohres (12) ausgebildet ist.

4. Sanitärschlauch nach einem oder mehreren der Ansprüche 1 bis 3, dadurch gekennzeichnet, daß der Außenringflansch (28) der Hülse (7) mit einer Nut (27) als Sitz eines O-Ringes (26) ausgebildet ist.

5. Sanitärschlauch nach einem oder mehreren der Ansprüche 1 bis 4, dadurch gekennzeichnet, daß das Innenrohr (14) auf einen Ring verkürzt ist, dessen Außenzylinder eine Nut (15) für einen O-Ring (26) aufweist.

6. Sanitärschlauch nach einem oder mehreren der Ansprüche 1 bis 5, dadurch gekennzeichnet, daß der axiale Außenmantel (30) der Überwurfmutter (9) konisch und das Muttergewinde (10) in einem gegenüber dem glatten Innenzylinder (25) vergrößerten Innenzylinder angeordnet ist.

7. Sanitärschlauch nach einem oder mehreren der Ansprüche 1 bis 6, dadurch gekennzeichnet, daß auf dem Schlauchende und dem Außenzylinder (23) der angespritzten Kunststoffhülse (7) ein Metallrohr (22) mit einem auf der Unterseite des Hülsenflansches (28) abgestützten Außenringflansch (21) angeordnet ist, dessen Unterseite als Gleitlager der Überwurfmutter (9) dient.

8. Sanitärschlauch nach einem oder mehreren der Ansprüche 1 bis 7, dadurch gekennzeichnet, daß der lichte Durchmesser des Innenrohres (14) und seines Flansches (19) gleich oder größer als der lichte Innendurchmesser des Schlauches (1) ist.

## Claims

1. A sanitation tube (1) with rotatable coupling attachment (8) of a connection piece, wherein a union nut (9) riding on an outer thread of the connection piece secures in place on the frontal side of the connection piece an outer annular flange (11) of an inner pipe (12), whereby the inner pipe is sealed off against an inner cylinder, characterised in that the union nut (9) is supported axially on a sleeve (7) which is injection-moulded on to the end of the sanitation tube, and that the inner pipe (12) which is sealed off against an inner cylinder (25) of the union nut (9) terminates with axial clearance distance before an outer annular flange (28) of the sleeve (7).

2. A sanitation tube according to claim 1, characterised in that the inner end (19) of the inner thread (10) of the union nut (9) serves as the axial support of the inner pipe flange (11) which is screwed into position.

3. A sanitation tube according to one of the claims 1 or 2, characterised in that, between its inner thread (10) on the side of the connection piece and its inner union flange (20), the union nut (9) is constructed so as to form a sealing surface for the annular seals (16, 26) of the injection-moulded sleeve (7) and the inner pipe (12).

4. A sanitation tube according to one or more of the claims 1 to 3, characterised in that the outer annular flange (28) of the sleeve (7) is constructed with a groove (27) as seating for an O-ring (26).

5. A sanitation tube according to one or several of the claims 1 to 4, characterised in that the inner pipe (14) is shortened to a ring the outer cylinder of which comprises a groove (15) for an O-ring (26).

6. A sanitation tube according to one or several of the claims 1 to 5, characterised in that the axial outer casing (30) of the union nut (9) is conical and the nut thread (10) is arranged within an enlarged inner cylinder compared to the smooth inner cylinder (25).

7. A sanitation tube according to one or several of the claims 1 to 6, characterised in that, arranged on the end of the tube and on the outer cylinder (23) of the injection-moulded synthetic sleeve (7), there is a metal pipe (22) having an outer annular flange (21) supported on the underside of the sleeve flange (28), the underside of said metal pipe (22) serving as a sliding bearing of the union nut (9).

8. A sanitation tube according to one or several of the claims 1 to 7, characterised in that the clearance diameter of the inner pipe (14) and of its flange (19) is equal to or greater than the inside clearance diameter of the tube (1).

## Revendications

1. Flexible pour installations sanitaires (1), comportant un accouplement tournant (8) d'une pièce de raccordement, dans lequel un écrou de recouvrement (9) chevauchant sur le filetage extérieur de la pièce de raccordement assure le serrage d'une bride annulaire extérieure (11) d'un tube intérieur (12) sur la face en bout de la pièce de raccordement, le tube intérieur étant rendu étanche par rapport à un cylindre intérieur,
caractérisé en ce que l'écrou de recouvrement (9) s'appuie axialement sur une douille (7) coulée par injection sur l'extrémité du flexible pour installations sanitaires et en ce que le tube intérieur (12), rendu étanche par rapport à un cylindre intérieur (25) de l'écrou de recouvrement (9), se termine à une certaine distance axiale en avant d'une bride annulaire extérieure (28) de la douille (7).

2. Flexible pour installations sanitaires suivant la revendication 1, caractérisé en ce que l'extrémité intérieure (19) du filetage intérieur (10) de l'écrou de recouvrement (9) sert d'appui axial à la bride annulaire extérieure (11) vissée à l'intérieur.

3. Flexible pour installations sanitaires suivant la revendication 1 ou la revendication 2, caractérisé en ce que l'écrou de recouvrement (9) est réalisé sous la forme d'un cylindre lisse entre son filetage intérieur (10) côté pièce de raccordement et sa bride intérieure de recouvrement (20) comme surface d'étanchéité pour des joints d'étanchéité annulaires (16, 26) de la douille (7) coulée par injection et du tube intérieur (12).

4. Flexible pour installations sanitaires suivant l'une ou plusieurs des revendications 1 à 3, caractérisé en ce que la bride annulaire extérieure (28) de la douille (7) est réalisée avec une rainure (27) comme siège d'un joint torique (26).

5. Flexible pour installations sanitaires suivant l'une ou plusieurs des revendications 1 à 4, caractérisé en ce que le tube intérieur (14) est réduit à une bague dont le cylindre extérieur présente une rainure (15) pour un joint torique (26).

6. Flexible pour installations sanitaires suivant l'une ou plusieurs des revendications 1 à 5, caractérisé en ce que la surface extérieure axiale (30) de l'écrou de recouvrement (9) est conique et en ce que le filetage (10) de l'écrou est disposé dans un cylindre intérieur aggrandi par rapport au cylindre intérieur lisse (25).

7. Flexible pour installations sanitaires suivant l'une ou plusieurs des revendications 1 à 6, caractérisé en ce que, sur l'extrémité du flexible et sur le cylindre extérieur (23) de la douille (7) en matière plastique coulée par injection, est disposé un tube métallique (22) comportant une bride annulaire extérieure (21) s'appuyant sur la face inférieure de la bride (28) de la douille et dont la face inférieure sert de palier de glissement pour l'écrou de recouvrement (9).

8. Flexible pour installations sanitaires suivant l'une ou plusieurs des revendications 1 à 7, caractérisé en ce que le diamètre d'ouverture du tube intérieur (14) et de sa bride (19) est égal ou supérieur au diamètre d'ouverture intérieur du flexible (1).
